# DEMANDE DE BREVET EUROPEEN

(11) **EP 2 213 537 A1**
(43) Date de publication de la demande: **04.08.2010**
(21) Numéro de dépôt: 09180720.6
(22) Date de dépôt: 24.12.2009
(51) Int. Cl.: B60T 11/26, F15B 1/26

(54) **Réservoir pour un circuit de commande hydraulique, en particulier pour véhicule automobile.**

(30) Priorité: 20.01.2009 FR 0950319
(71) Demandeur: Peugeot Citroën Automobiles SA, 78140 Vélizy-Villacoublay (FR)
(72) Inventeur: Briard, Jean-Luc, 75013, PARIS (FR)

(57) **Abrégé**

Réservoir pour un circuit de commande hydraulique, en particulier pour véhicule automobile, formant un volume fermé (2) comprenant un orifice de remplissage (20), et vers le bas un fond (34) sensiblement plat et horizontal comportant au moins un orifice d'alimentation (10, 12) d'un circuit hydraulique, **caractérisé en ce que** ce fond (34) comporte à l'intérieur, un petit relief (30) délimitant des creux.

## Description

La présente invention concerne un réservoir de liquide pour circuit de commande hydraulique, en particulier pour véhicule automobile, ainsi qu'un véhicule automobile équipé d'un circuit hydraulique de freinage comportant un tel réservoir.

Les véhicules automobiles comportent une commande de freinage comprenant généralement une pédale de frein agissant sur un maître cylindre, pour transmettre par un ou plusieurs circuits hydrauliques une pression du fluide vers des récepteurs freinant les différentes roues du véhicule.

La pédale de frein agit sur un piston coulissant axialement dans un maître cylindre, qui sépare un volume avant comprenant une chambre mise en pression par le déplacement de cette pédale, d'un volume arrière relié à un réservoir contenant une réserve de liquide à pression atmosphérique.

Lorsque le conducteur relâche la pédale de frein qui vient en position de repos, le piston recule et dégage un passage mettant en communication la chambre de pression avec le réservoir de liquide pour ajuster le niveau du circuit hydraulique, par exemple après une usure des garnitures de freinage, ou une dilatation du circuit due à un écart de température.

Le réservoir comporte un orifice supérieur fermé par un bouchon pour le remplissage initial du circuit hydraulique, ou la mise à niveau lors d'opérations d'entretien. Des particules lourdes peuvent être introduites dans le réservoir lors de ces remplissages, elles peuvent provenir aussi de la matière plastique du réservoir.

Le véhicule peut comporter des systèmes d'aide à la conduite comme un système d'antiblocage des freins ABS, ou de contrôle de stabilité du véhicule ESP, qui agissent de manière indépendante sur les freins des différentes roues. Ces systèmes comportent une pompe qui lors du fonctionnement, prend le liquide dans le réservoir et le renvoie ensuite dedans.

Le réservoir peut aussi alimenter une commande d'embrayage, qui renvoie du liquide dans ce réservoir en fonction de l'usure de l'embrayage.

Ces différents retours de liquide peuvent faire venir des particules lourdes dans le réservoir, qui se déposent au fond de celui-ci. Les particules peuvent ensuite être entraînées dans un circuit hydraulique, et occasionner des défaillances en bouchant par exemple des passages de section réduite des blocs hydrauliques des systèmes d'aide à la conduite.

Pour protéger ces installations de freinage, un dispositif décrit notamment dans le document FR-B1-2867133, présente un réservoir contenant une cloison interne basse, qui délimite un petit volume recevant le liquide de freinage venant en retour. Ce petit volume permet une certaine décantation, par dépose des particules au fond due à la gravité.

Seulement pour des particules se déposant lentement, ou dans le cas d'un fort débit, ce dispositif n'empêche pas toutes les particules de venir dans le réservoir principal et de s'y déposer ensuite au fond. De plus une décantation du liquide introduit par l'orifice de remplissage, ou venant de la matière du réservoir, se fera aussi au fond du réservoir principal.

Il y a alors un risque de voir au bout d'un certain temps de fonctionnement, des parties de la couche de sédiments déposée au fond du réservoir et devenant plus épaisse, se détacher et venir glisser dans un circuit hydraulique comprenant une alimentation au fond de ce réservoir. Ces particules peuvent alors perturber le fonctionnement du freinage.

La présente invention a notamment pour but d'éviter ces inconvénients de la technique antérieure, et d'apporter à la réalisation d'un réservoir de liquide de frein, une solution simple, efficace et économique pour limiter l'introduction de particules dans les circuits hydrauliques.

Elle propose à cet effet un réservoir pour un circuit de commande hydraulique, en particulier pour véhicule automobile, formant un volume fermé comprenant un orifice de remplissage, et vers le bas un fond sensiblement plat et horizontal comportant au moins un orifice d'alimentation d'un circuit hydraulique, **caractérisé en ce que** ce fond comporte à l'intérieur, un petit relief délimitant des creux.

Un avantage du réservoir selon l'invention, est que les creux entre le relief du fond peuvent former des petites rétentions couvrant en partie le fond du réservoir, qui gardent des impuretés se déposant dedans par gravité, et évitent de les laisser glisser vers l'orifice d'alimentation du circuit hydraulique.

Le réservoir selon l'invention peut en outre comporter une ou plusieurs des caractéristiques suivantes, qui peuvent être combinées entre elles.

Avantageusement, le relief comprenant une faible hauteur constante, forme des lignes continues entre lesquelles se trouvent les creux constituant des rainures qui ne débouchent pas sur un orifice d'alimentation.

Avantageusement, le relief forme des cercles concentriques disposés autour des orifices d'alimentation.

Le relief peut aussi former des lignes parallèles.

Avantageusement, la hauteur du relief est inférieure à 5 millimètres.

Avantageusement, les creux délimités par le relief couvrent la majeure partie du fond du réservoir.

Selon un mode de réalisation particulier, le fond du réservoir est formé par un moulage de matière plastique.

Avantageusement, le réservoir est utilisé pour un circuit de commande hydraulique actionnant des freins d'un véhicule automobile.

L'invention comprend aussi un véhicule automobile comportant des freins de roues et un circuit hydraulique de commande de ces freins, **caractérisé en ce que** ce circuit hydraulique est alimenté par un réservoir réalisé suivant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue schématique en coupe suivant un plan vertical, d'un réservoir selon l'art antérieur ;
- la figure 2 est une vue schématique en coupe suivant un plan vertical, d'un réservoir selon l'invention ; et
- la figure 3 est une vue de dessus du fond de ce réservoir.

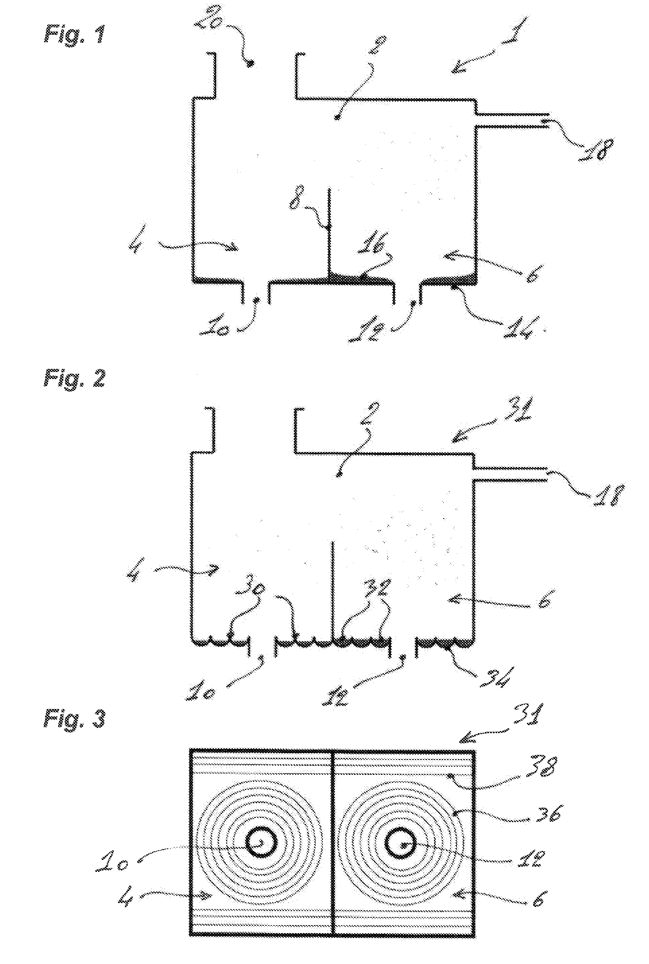

La figure 1 représente un réservoir 1 comportant un volume fermé 2 comprenant un orifice supérieur de remplissage 20. Le fond 14 de ce réservoir 1 comprend deux cavités 4, 6 séparées par une cloison intermédiaire 8, dont le bord supérieur définit la hauteur de ces cavités.

Deux orifices d'alimentation 10, 12 d'un maître cylindre de freinage délivrant une pression dans deux circuits indépendants de freinage, débouchent dans le fond 14 de chaque cavité. Ces cavités 4, 6 constituent des réserves de sécurité indépendantes pour chaque circuit hydraulique, en cas de fuite de l'un des circuits.

Un orifice de retour 18 débouchant en haut du volume fermé 2, permet un retour de liquide, venant par exemple d'un groupe hydraulique de commande de freinage.

Une commande hydraulique d'embrayage peut aussi être alimentée par le même réservoir 1.

Le fond 14 de chaque cavité 4, 6, est globalement plat et lisse, avec les orifices d'alimentation 10, 12 sensiblement centrés dans chaque cavité 4, 6. Au cours de la durée de vie du véhicule, des particules en suspension dans le liquide de freinage, peuvent se déposer progressivement sur le fond 14 des cavités 4, 6, et former une couche de sédiments 16 venant près des orifices d'alimentation 10, 12.

La couche de sédiments 16 qui restent meuble, déposée sur le fond 14 plat et lisse du réservoir 1, peut comprendre à partir d'une certaine épaisseur des parties entraînées par un flux vers un orifice d'alimentation 10, 12, qui se détachent et viennent polluer les circuits hydrauliques. Ce glissement et d'autant plus facile que le fond 14 du réservoir 1 est lisse, et que la hauteur de la couche de sédiments 16 est importante.

Les figures 2 et 3 présentent un réservoir 31 dont le fond 34 des cavités 4, 6 est aussi sensiblement plat, mais comporte à l'intérieur un relief 30 comprenant une faible hauteur constante, formant des lignes continues. Ce relief 30 peut former des cercles concentriques 36 disposés autour des orifices d'alimentation 10, 12, ou des lignes parallèles 38. La hauteur de ce relief est de quelques millimètres, avantageusement elle est inférieure à 5 millimètres.

On peut avoir comme présenté figure 3, une succession de cercles concentriques 36 autour des orifices 10, 12, jusqu'à ce que le plus grand cercle rejoigne un bord de la cavité 4, 6, puis ensuite des lignes parallèles 38 réparties sur la surface du fond 34 restant disponible, pour couvrir sensiblement toute la surface du fond 34.

L'espace entre les lignes continues 36, 38, constitue des rainures continues dont le fond en arc de cercle forme un volume recevant les dépôts de sédiments 32, dans les deux cavités 4, 6. La répartition du relief 30 sensiblement sur toute la surface du fond 34 du réservoir 31, permet avec une faible hauteur de ce relief, de fournir un volume assez élevé pouvant recevoir une quantité importante de sédiments, et les maintenir en place.

De plus les rainures concentriques 36 ne débouchant pas sur les orifices 10, 12, protègent ces orifices. Les dépôts de sédiments 32 restant meubles, doivent franchir une succession de barrières formées par le relief concentrique, ils ne peuvent par glisser facilement vers ces orifices.

Avantageusement, le réservoir 31 est formé par un moulage de matière plastique qui permet de réaliser de manière économique le relief 30 sur le fond 34 de ce réservoir. On peut en particulier mouler facilement une demi-coquille inférieure comportant le relief 30 suivant une forme précise, et une demi-coquille supérieure, puis les assembler ensemble pour refermer le réservoir 31.

Le réservoir 31 suivant l'invention permet sans coût additionnel, d'assurer une protection supplémentaire des circuits hydrauliques, en particulier tout au long de la durée de vie du véhicule. Il peut s'appliquer pour des circuits hydrauliques de commande de tous type de fonctions, comme le freinage, l'embrayage ou la suspension du véhicule par exemple.

## Revendications

1. Réservoir pour un circuit de commande hydraulique, en particulier pour véhicule automobile, formant un volume fermé (2) comprenant un orifice de remplissage (20), et vers le bas un fond (34) sensiblement plat et horizontal comportant au moins un orifice d'alimentation (10, 12) d'un circuit hydraulique, **caractérisé en ce que** ce fond (34) comporte à l'intérieur, un petit relief (30) délimitant des creux.

2. Réservoir pour un circuit de commande hydraulique selon la revendication 1, **caractérisé en ce que** le relief (30) comprenant une faible hauteur constante, forme des lignes continues entre lesquelles se trouvent les creux constituant des rainures qui ne débouchent pas sur un orifice d'alimentation (10, 12).

3. Réservoir pour un circuit de commande hydraulique selon la revendication 2, **caractérisé en ce que** le relief (30) forme des cercles concentriques (36) disposés autour des orifices d'alimentation (10, 12).

4. Réservoir pour un circuit de commande hydraulique selon la revendication 2 ou 3, **caractérisé en ce que** le relief (30) forme des lignes parallèles (38).

5. Réservoir pour un circuit de commande hydraulique selon l'une quelconque des revendications précédentes, **caractérisé en ce que** la hauteur du relief (30) est inférieure à 5 millimètres.

6. Réservoir pour un circuit de commande hydraulique selon l'une quelconque des revendications précédentes, **caractérisé en ce que** les creux délimités par le relief (30), couvrent la majeure partie du fond (34) du réservoir (31).

7. Réservoir pour un circuit de commande hydraulique selon l'une quelconque des revendications précédentes, **caractérisé en ce que** le fond (34) de ce réservoir (31) est formé par un moulage de matière plastique.

8. Réservoir pour un circuit de commande hydraulique selon l'une quelconque des revendications précédentes, **caractérisé en ce que** cette commande hydraulique actionne des freins d'un véhicule automobile.

9. Véhicule automobile comportant des freins de roues et un circuit hydraulique de commande de ces freins, **caractérisé en ce que** ce circuit hydraulique est alimenté par un réservoir (31) réalisé suivant l'une quelconque des revendications 1 à 7.
